# EUROPEAN PATENT APPLICATION

(11) **EP 4 498 542 A1**
(43) Date of publication of application: **29.01.2025**
(21) Application number: 23188070.9
(22) Date of filing: 27.07.2023
(51) Int. Cl.: H02B 1/36, H02B 11/133, H02B 11/173

(54) **MULTI-USE CONTROL SYSTEM FOR SWITCHGEAR MODULE WITH SLOTTED DISK ELEMENTS AND CAM ASSEMBLIES**

(71) Applicant: ABB SCHWEIZ AG, 5400 Baden (CH)
(72) Inventor: RADER, Samuel, 76187 Karlsruhe (DE); PENNER, Simon, 67574 Osthofen (DE); STAHL, Thomas, 74937 Spechbach (DE)
(74) Representative: Maiwald GmbH

(57) **Abstract**

The invention relates to a multi-use control system (100) for a switchgear module (10), which comprises a switching assembly, which is configured to switch the switchgear module (10) between a plurality of modes of operation, an interlocking assembly having a locking element (200), and an operating element (160) that is configured to pivot between a plurality of angular positions comprising a first group of angular positions (161, 162, 163) and a second group of angular positions (163, 164). The interlocking assembly is configured to secure the switchgear module (10) to or release the switchgear module from a compartment by means of the locking element (200). The operating element (160) is configured to control the switching assembly to switch the switchgear module (10) between the plurality of modes of operation, when pivoting between the first group of angular positions (161, 162, 163), and to control the interlocking assembly to secure or release the switchgear module (10), when pivoting between the second group of angular positions (163, 164).

## Description

### FIELD OF INVENTION

The present disclosure relates to industrial automation. In particular, the present disclosure relates to a multi-use control system for a switchgear module, a switchgear module, the use of a multi-use control system for a switchgear module for a safe operation of the switchgear module, a method for operating a switchgear module by means of a multi-use control system.

### BACKGROUND

Switchgear technology is widely implemented in electrical power systems, such as industrial automation and robotic systems, in order to provide effective control and reliable protection for the embedded electrical components. In particular for low-voltage applications, switchgear modules may regulate power distribution within the electrical power systems, ensuring efficient operation and optimal management of electrical loads. Equipped with protective components such as circuit breakers and fuses, such switchgear modules may safeguard against overcurrent and short circuits, minimizing the risk of equipment damage or accidents. Further, these modules may offer flexibility in installation, expansion, and maintenance, for example for the the automation and robotic systems. It may thus be of great importance that these switchgear modules may be implemented and operated in a well-controlled manner.

### SUMMARY

It may be seen as an objective of the invention to provide an improved control system for seamless operating a switchgear device with a higher flexibility and reliability.

The objective is achieved by the subject matter of the independent claims. The dependent claims, the following description and the drawings show embodiments of the invention.

According to a first aspect of the present, a multi-use control system is provided for a switchgear module. The multi-use control system comprises a switching assembly, which is configured to switch the switchgear module between a plurality of modes of operation, an interlocking assembly comprising a locking element, and an operating element, which is configured to pivot between a plurality of angular positions comprising a first group of angular positions and a second group of angular positions. The interlocking assembly is configured to secure the switchgear module to or release the switchgear module from a compartment by means of the locking element.

The operating element is configured to control the switching assembly to switch the switchgear module between the plurality of modes of operation, when pivoting between the first group of angular positions, and to control the interlocking assembly to secure or release the switchgear module, when pivoting between the second group of angular positions.

For example, the compartment may be a housing, in which the switchgear module may be placed or mounted, so that the switchgear module may be operated under a safety condition. The switchgear module may be released or detachted from the compartment while not being operated. Hence, the switchgear module may be designed as a withdrawable switchgear module. In particular, the withdrawable switchgear module may be a low-voltage switchgear module.

The operating element or the operating handle of the withdrawable low-voltage switchgear module may be designed to operate not only the switching assembly as the main switching device, but also the interlocking assembly or the interlocing mechanism for locking and releasing the switchgear module in its compartment.

To guarantee that the handle and the switching assembly may correspond at least at the ON-, OFF- and/or TEST-positions, an additional pin may be provided for connecting the handle and the switching assembly or the first disk element. This may ensure that the switching operation may not fail, especially not when the OFF-mode is required.

According to an embodiment, the switching assembly may comprise a first disk element, which is connectable to the operating element and configured to be pivotable with the operating element, a second disk element and a cam assembly. The cam assembly of the switching assembly may be a first cam assembly for the control system and configured to connect the first disk element to the second disk element and to allow the second disk element pivoting with the first disk element, when the operating element may pivot between the first group of angular positions for switching the switchgear module between the plurality of modes of operation.

The cam assembly may comprise a pivoting element, which may be arranged at the rim of the first disk element and configured to pivot along with the first disk element, a protruding element arranged at an end of the pivoting element and a third pin, which may be arranged at the second disk element und with which the pivoting element may engage, when the operating element may pivot between the first group of angular positions for switching the switchgear module.

In other words, the pivoting element or the pivoting body may be configured to link the first disk element connected to the operating element as a driving body and the second disk element as a driven body, allowing a continuous transmissionof the rotary motion between the operating element and the switching assembly or the switching device.

According to another embodiment, the interlocking assembly may further comprise the first disk element that may comprise a slotted opening, along which the locking element may be able to slide when the operating element may pivot between the first group of angular positions for switching the switchgear module between the plurality of modes of operation.

In addition, the cam assembly of the first disk element may be configured to disconnect the first disk element from the second disk element, and to allow the first disk element pivoting with the operating element between the second group of angular positions and converting a rotational motion of the first disk element into a translational motion of the interlocking assembly, by means of the locking element, for securing or releasing the switchgear module. A linear force may thus be applied to the locking element of the interlocking assembly. The locking element may be an interlocking lever.

The first disk element may further comprise a second opening, which may be provided at the rim of the first disk element and extend over a predefined length between a first opening end and a second opening end. The second disk element may comprise a first pin, which may be arranged at the second opening of the first disk element and configured to slide along the second opening between the first opening end and the second opening end, when the operating element may pivot between the second group of angular positions.

The first disk element may be designed to be a common, multi-use rotating element for both the switching assembly and the interlocking assembly. In particular, the first disk element may be designed to pivot or rotate with the operating element as a switching assembly, when the operating element may pivot between the first group of angular positions and the switchgear module may be switched between the plurality of modes of operation. In other words, the first disk element and the second disk element may rotate or pivor synchonically, since the cam assembly may be designed to connect and couple the first and second disk elements, so that the rotational motion of the first disk element may be converted or translated into the rotational motion of the second disk element. Accordingly, the locking element of the interlocking assembly may comprise a second pin that may be configured to slide along the slotted opening or the first opening of the first disk element, so that, when the operating element may pivot between the first group of angular positions, the locking element may be kept at the same position without translational movement.

In contrast, when the operating element may pivot between the second group of angular positions and the second disk element may be disconnected from or decoupled with the first disk element, the first disk element may be designed to connect to the locking element and form the interlocking assembly with the locking element, as the second pin of the locking element may only be arranged at the second end of the slotted opening of the first disk element. The rotational motion of the first disk element may merely be converted into the translational motion of the locking element via the second pin that may be fixed at the second end of the slotted opening. Moreover, as the cam assembly may disconnect the first disk element from the second disk element, the rotational motion of the first disk element may not be transmitted to or converted into the rotational motion of the second disk element. In other words, the transmission of the rotary motion from the first disk element to the second disk element may be interrupted as a result of the opened cam assembly. Due to the relative rotational motion between the first and second disk elements, the first pin may be configured to slide from the first opening end to the second opening end, when the operating element may pivot for releasing the switchgear module.

The second pin of the locking element and the slotted opening at the first disk element may form a second cam assembly, in particular when the second pin may be arraged at the second end of the slotted opening and the rotational motion of the operating handle and the connected first disk element may lead to a translational movement of the locking element by a predefined distance.

The first pin arranged at the second disk element and the second opening provided at the rim of the first disk element may form a third cam assembly. For example, the second opening may be configured to define the rotational movement of the first pin from the first opening end to the second opening end and the translational movement of the locking element over the predefined distance.

The arrangement of the multiple disk elements and the cam assemblies with a plurality of pins in the control system may be designed to enable the switching mechanism inside the switchgear module and the interlocking mechanism between the switchgear module and the compartment. In particular, the plurality of cam assemblies comprising the cam assembly as the first cam assembly, the second cam assembly and the third cam assembly among the first disk element, the second disk element and the locking element may allow a countinuous transition between the switching mechamism and the interlocking mechanism for the low-voltage switchgear module in a single continuous motion. Also, the plurality of cam assemblies of the control system allow a separation of the switching and interlocking functions for the switchgear module.

According to another embodiment, the plurality of modes of operation of the switchgear module may comprise a first mode of operation and a second mode of operation. Further, the first group of angular positions of the operating element may comprise a first angular position, which may be configured to interconnect with the first mode of operation of the switchgear module, and a second angular position, which may be configured to interconnect with the second mode of operation of the switchgear module.

According to another embodiment, the first mode of operation of the switchgear module may be an ON-mode and the second mode of operation of the switchgear module may be an OFF-mode. Further, the first angular position of the operating element may be a 0° angular positon, and the second angular position of the operating element may be a 90° angular positon or a 135° angular position.

According to another embodiment, the plurality of modes of operation of the switchgear module may further comprise a third mode of operation. Further, the first group of angular positions of the operating element may further comprise a third angular position, which may be configured to interconnect with the third mode of operation of the switchgear module.

According to another embodiment, the third mode of operation of the switchgear module may be an TEST-mode. It may be provided that the second angular position of the operating element may be a 90° angular positon and the third angular position of the operating element may be a 135° angular positon.

In the ON-mode, the switchgear module may be inserted or secured in the compartment, a main switch of the switchgear module may be closed, the main circuit and control circuit of the switchgear module may be connected. In the OFF-mode, the switchgear module may be inserted or secured in the compartment, the main switch of the switchgear module may be open, the main circuit and the control circuit of the switchgear module may be disconnected. A padlocking for the switchgear module may be provided for the OFF-mode. In the TEST-mode, the switchgear module may be inserted or secured in the compartment, the main switch of the switchgear module may be open, the main circuit of the switchgear module may be disconnected. A padlocking for the switchgear module may be provided for the TEST-mode. Compared to the OFF-mode, the additional TEST-mode may be designed to allow the control circuit being still connected.

According to another embodiment, the second group of angular positions of the operating element may comprise a closed angular position, which may be configured to interconnect with the interlocking assembly for securing the switchgear module to the compartment by means of the locking element, and an open angular position, which may be configured to interconnect with the interlocking assembly for releasing the switchgear module from the compartment.

According to another embodiment, the multi-use control system may further comprise a transition assembly which may comprise a transition element.

The transition element may be a hinge, which may be arranged adjacent to the first disk element, in particular to the cam assembly, when the operating element may pivot into the second or third angular position or at the 90° or 130° angular position.

The transition element may further comprise the cam assembly, which may be configured to collide with the transition element or the hinge, when the operating element may pivots into the second or third angular position at the 90° or 130° angular position and the switchgear module may be switched to the OFF- or TEST-mode.

The transition assembly may be configured to transit the controlling over the switching assembly for switching the switchgear module, from the first mode of operation to the second mode of operation and/or the third mode of operation, to the controlling over the interlocking assembly for releasing the switchgear module from the compartment, when the operating element may pivot from the first group of angular positions to the second group of angular positions in a direction.

According to another embodiment, the transition assembly may be configured to transit the controlling over the interlocking assembly for securing the switchgear module to the compartment to the controlling over the switching assembly for switching the switchgear module, from the third mode of operation and/or the second mode of operation to the first mode of operation, when the operating element may pivot from the second group of angular positions to the first group of angular positions in an opposite direction.

The transition assembly may allow immediate separation or connection of the various components, for example the first disk element with the second disk element or the locking element, and the driving force of the operating element may be transmitted to the various components at different angular positions during the rotation.

In other words, the transition from the controlling over the switching assembly to the controlling over the interlocking assembly in the direction, which may be a first direction or a counterclockwise direction, may be performed as a result of the collision of the cam assembly, in particular the protruding element of the pivoting element, with the hinge at the closed angular position or at the 90° or 135° angular position, so that the cam assembly may be configured to be declutched or opened to disconnect the first disk element from the second disk element and the pivoting element may not engage with the third pin arranged at the second disk element. The transition may thus be performed at the 90° or 130° angular position as a predefined turning angular postion.

By connecting the two bodies of the first and second disk elements using the cam assembly that is able to clutch or declutch at the predefined turning angular position, the arrangement of the plurality of disk elements and the cam assemblies may further transmit the angular position of the operating element to the switching assembly inside the switchgear module, before the opering handle reaches the tuning angular position. Beyond the turning angular postion of the operating element, at which the pivoting element collides with the transition element, the transmission of the driving force may be interrupted. By turning or pivoting the operating element further, the interlocking assembly or the locking element may be released and the switchgear module may be brought into the moving position in a RELEASE-mode for the switchgear module, for example as a 180° angular position as the open angular position.

The operating element may pivot in two separate angular ranges including a first angular range, which may cover the 0° to 90° or 135° angular positions, for switching the switchgear module between the ON-, OFF- and/or TEST-modes and a second angular range, which may cover the 90° or 135° to 180° angular positions, for controlling the interlocking assembly to lock or release the switchgear module.

Alternatively, the transition from the controlling over the interlocking assembly to the controlling over the switching assembly in the opposite direction, which may be a second direction or a clockwise direction, may be performed, when the operating element may pivot or return from the open angular position or the 180° angular position to the closed angular position or the 90° or 135° angular position. Accordingly, the cam assembly may be configured to be clutched or closed to connect the first disk element with the second disk element, and the switchgear module may be secured to the compartment. The pivoting element of the cam assembly arranged at the first disk element may engage with the third pin arranged at the second disk element again at the closed angular position of the second group of angular position for securing again the switchgear module to the compartment.

It may be noted that, when the operating element may get turned in the opposite direction, the control system may be designed to first lock or secure the switchgear module in the compartment and then start to transmit the angular position to the switching assembly as the main switch again.

According to another embodiment, the operating element may be a handle that may be configured to connect to the first disk element via a shaft and be driven manually or automatically to pivot about an axis of the shaft.

The shaft may be configured to arrange the handle, the first disk element and the second element in line with a common axis of rotation while pivoting. This may result in a simple and compact construction of the multi-use control system, which may be adjusted to deal with various requirements regarding, for example, angles, torques and/or sizes, for the switchgear module.

As a single operating handle, the operating element may be arranged on the front of the switchgear module and fulfill two separate functions safely and reliably: the switching of the swiching device or the main switching device into all its possible positions, such as the ON-, OFF-, TEST-positions, which may be set by various angular positions such as 0°, 90°, 135° angular positions, and the locking or releasing the entire switchgear module inside its compartment by converting the rotary motion of the main handle into a translatory motion. This mechanism may ensure that the main switching assembly may be switched to the OFF-mode, before the switchgear module may be released. Once the switchgear module may be secured to into the compartment again, the mechanism may ensure that the switching assembly may first be switched to the OFF-mode and then the operating ON-mode.

In order to meet the first functional requirement, the rotary motion of the operating handle on the switchgear module front may be translated to main switching assembly so that the turning angles of the handle and the sense of the rotation of the switching assembly may correspond to each other. As the angular range of the main switching assembly may be mechanically restricted by the multiple cam assemblies with the designed openings in predefined dimensions, the transmission of the rotary movement may automatically be interrupted at the predefined transition or turning angle, for example, when the pivoting element of the cam assembly may collide with the transition element.

Alternatively, for example, the first angular position, the second angular position and/or the third angular position may be any angular position between 0° and 180° arranged in a sequence along the same direction for pivoting the operating element and the respective first and second pivoting elements being coupled with each other. As such, the predefined turning angular position being the second or third angular position may be arranged between 0° and 180°. Further, after the transition from the switching mechanism to the interlocking mechanism for the switchgear module, the pivoting element may drive the first pivoting element to the open angular position for releasing the switchgear module, which may be arranged, alternatively to the 180° angular position, between the turning angular position and the 180° angular position, or at a larger angular position between 180° to 360° angular positions, preferably between 180° to 270° angular positions, preferably between 180° or 225° angular positions.

According to a second aspect, a switchgear module comprising a multi-use control system is provided. The switchgear module is a low-voltage switchgear module.

The switchgear module may be provided for an electrical power system, for example, an automation system or a robotic system.

The low-voltage switchgear module may be configured to operate at a voltage range between 0 V and 1000 V. Alternatively, the switchgear module may be a medium-voltage or high-voltage switchgear module. And the multi-use control system may also be provided for the medium-voltage or high-voltage switchgear module.

According to another aspect, a use of a multi-use control system for a switchgear module is provided for a safe operation of the switchgear module.

According to another aspect, a method for operating a switchgear module by means of a multi-use control system is provided. The method comprises the following steps: pivoting an operating element in a direction between a first group of angular positions for switching the switchgear module between a plurality of modes of operation by means of a switching assembly, transiting the controlling over the switching assembly for switching the switchgear module to the controlling over an interlocking assembly for releasing the switchgear module from a compartment, and further pivoting the operating element in the direction between a second group of angular positions for securing the switchgear module to or releasing the switchgear module from a compartment by means of a locking element of an interlocking assembly.

Additionally, the method may further comprise the step of connecting the operating element to a first disk element of the switching assembly via a shaft, so that the operating element, which may be a handle, may be driven manually or automatically to pivot about an axis of the shaft.

The step of the pivoting the operating element in a direction between the first group of angular positions for switching the switchgear module between the plurality of modes of operation may be performed by connecting the first disk element with the second disk element of the switching assembly by means of a cam assembly, allowing the second disk element pivoting with the first disk element.

The step of the transiting the controlling over the switching assembly for switching the switchgear module to the controlling over the interlocking assembly for releasing the switchgear module from a compartment may comprise the step of disconnect the first disk element from the second disk element, for example by declutching or opening the cam assembly, by means of a transition assembly comprising a transition element.

The step of the further pivoting the operating element in the direction between the second group of angular positions for releasing the switchgear module from a compartment may comprise the step of converting a rotational motion of the first disk element into a translational motion of the locking element via a fixed third pin at a second end of a slotted opening of a first disk element.

Additionally, the method may further comprise the step of pivoting the operating element in an opposite direction for securing the switchgear module to the compartment, transiting the controlling over the interlocking assembly to the controlling over the switching assembly, and pivoting the operating element between the first group of angular positions for switching the switchgear module between the plurality of modes of operation.

There may be provided a computer program that comprises machine-readable instructions that, when executed by one or more computers and/or compute instances, cause the one or more computers and/or compute instances to perform a method for operating a switchgear module by means of a multi-use control system in an automation or robotic system.

There may be provided a non-transitory machine-readable data carrier and/or a download product with the computer program. A download product is an instance of the computer program that may be sold and downloaded online for immediate fulfilment in lieu of physically shipping a machine-readable data carrier.

There may be provided one or more computers and/or compute instances with the computer program comprising machine-readable instructions that, when executed by one or more computers and/or compute instances, cause the one or more computers and/or compute instances to perform a method for operating a switchgear module by means of a multi-use control system in an electrical power system including an automation system and a robotic system, and/or with the machine-readable data carrier and/or download product with the computer program.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects will be apparent from and elucidated with reference to the embodiments as per the drawings described hereinafter.

### BRIEF DESCRIPTION OF THE FIGURES

Examples of the disclosure will be described in the following with reference to the following drawings.

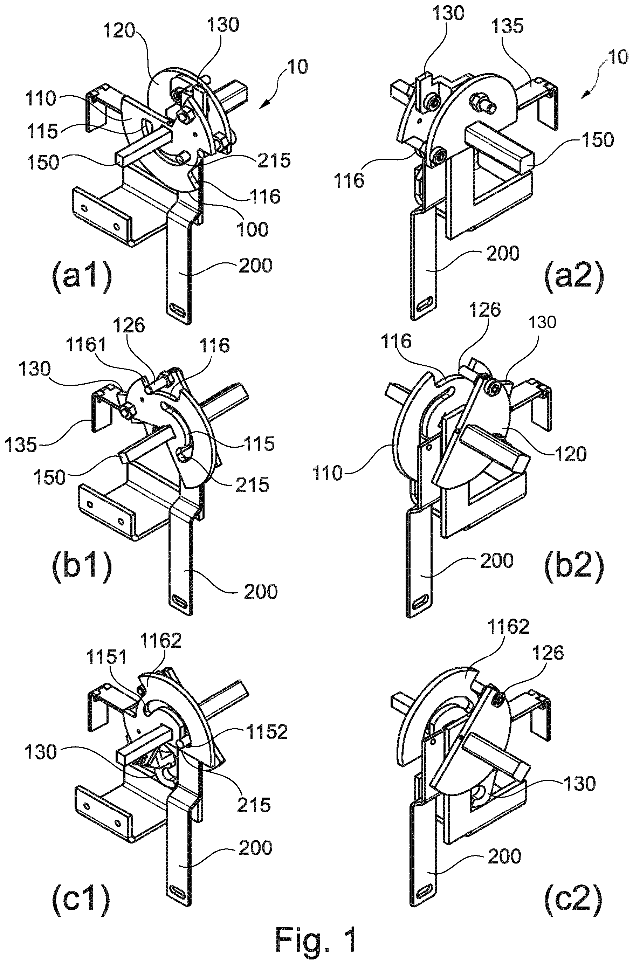

- Fig. 1 (a1) to (c1): shows schematically an example of a multi-use control system for a switchgear module in a first perspective view according to the present disclosure;
- Fig. 1 (a2) to (c2): shows schematically an example of a multi-use control system for a switchgear module in a second perspective view according to the present disclosure;
- Fig. 2 (a) to (d): shows schematically an example of a multi-use control system for a switchgear module in a front view according to the present disclosure;
- Fig. 3: shows schematically an example of a switchgear module according to the present disclosure;
- Fig. 4: shows schematically an example of a multi-use control system for a switchgear module in a front view according to the present disclosure;
- Fig. 5: shows schematically a flow chart illustrating a method for operating a switchgear module by means of a multi-use control system according to the present disclosure.

The figures are merely schematic representations and serve only to illustrate examples of the disclosure. Identical or equivalent elements are in principle provided with the same reference signs.

### DETAILED DESCRIPTION OF EMBODIMENTS

Fig. 1 shows schematically an example of a multi-use control system 100 for a switchgear module 10, which may be a low-voltage switchgear module. In particular, Fig. 1 (a1) to (c1) show, respectively, the multi-use control system 100 in various configurations in a first perspective view, while Fig. 1 (a2) to (c2) show, respectively, the multi-use control system 100 in the corresponding configurations in a second perspective view.

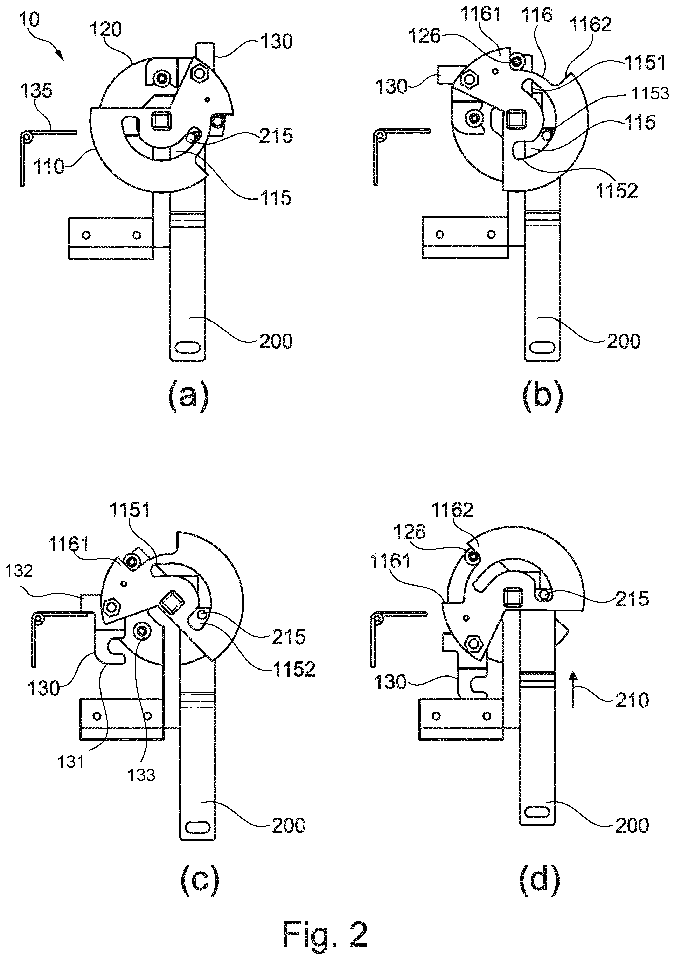

The multi-use control system 100 comprises a switching assembly, which is configured to switch the switchgear module 10 between a plurality of modes of operation as shown, respectively, in Fig. 1 (a1) to (c1) and Fig. 2 (a2) to (c2). The plurality of modes of operation of the switchgear module 10 may comprise a first mode of operation, as shown in Fig. 1 (a1) and (a2), and a second mode of operation, as shown in Fgi. 1 (b1) and (b2). The first mode of operation may be an ON-mode, in which the switchgear module may be switched to in a normal operation mode, while the second mode of operation may be an OFF-mode, in which the switchgear module 10 may be switched off or completely turned off.

The multi-use control system 100 further comprises an interlocking assembly that comprises a locking element 200, which may be configured to secure the switchgear module 10 to or release the switchgear module 10 from a compartment by means of the locking element 200.

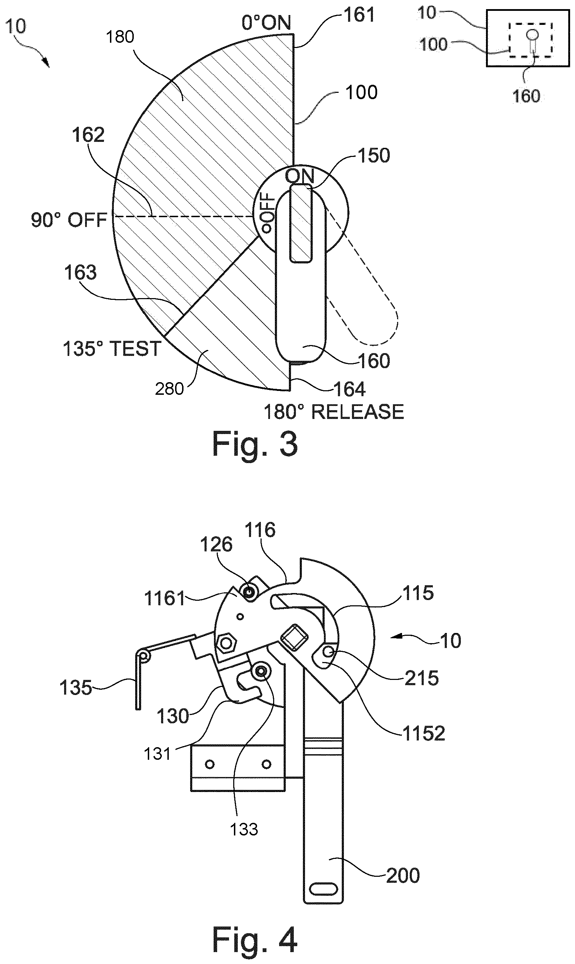

The control system 100 in Fig. 1 may further comprise an operating element 160 and a shaft 150, which may connects the operating element 160 on the switchgear module front with the switching assembly. As such, the operating element 160 may be designed as a handle as shown in Fig. 3 and arranged at the front side of the control system 100.

The operating element 160 in Fig. 3 may be configured to pivot between a plurality of angular positions comprising a first group of angular positions and a second group of angular positions. The first group of angular positions of the operating element 150 may comprise a first angular position 161, which may interconnect with and correspond to the first mode of operation or the ON-mode of the switchgear module 10, and a second angular position 162, which may interconnect with and correspond to the second mode of operation or the OFF-mode of the switchgear module 10. Refering back to Fig. 1, the first angular position 161 of the operating element 160 may be set as a 0° angular position for the corresponding ON-mode of the switchgear module as shown in Fig. 1 (a1) and (b1), and the second angular position 162 of the operating element 160 may be set as a 90° angular position for the corresponding OFF-mode of the switchgear module 10 as shown in Fig. 1 (a2) and (b2).

In Fig. 3, the second group of angular positions of the handle 160 further comprises a closed angular position and an open angular position 164. The closed angular position may be the second 90° angular position 162 of Fig. 1 (a2) and (b2) and may be designed as a turning angular position, in which the switchgear module 10 may still be secured to the compartment, and the open angular positiosn 164 may be configured to interconnect with or correspond to the interlocking assembly for releasing the switchgear module 10 from the compartment in a RELEASE-mode as shown in Fig. 1 (a3) and (b3). The open angular position 164 may be set as a 180° angular position.

Further, the operating element 160 may be configured to control the switching assembly to switch the switchgear module 10 between the plurality of modes of operation, namely from the ON-mode of Fig. 1 (a1) and (b1) to the OFF-mode of Fig. 1 (a2) and (b2), when pivoting between the first group of angular positions, namely from the first or 0° angular position 161 to the second or 90° angular position 162.

Additionaly, the operating element 160 may be configured to control the interlocking assembly to secure or release the switchgear module 10, when pivoting between the second group of angular positions 162, 164, namely between the closed 90° angular position refering to Fig. 1 (a2) and (b2) and the open 180° angular position referring to Fig. 1 (a3) and (b3).

The switching assembly of the control system 100 comprises a first disk element 110, which is connectable to the operating element 160 and configured to be pivotable with the operating element 160 via the shaft 150, a second disk element 120 and a cam assembly 130. The shaft 150 may be configured to arrange the handle 150, the first disk element 110 and the second element 120 in line with a common axis of rotation. This may result in a simple and compact construction of the multi-use control system 100, which may be adjusted to deal with various requirements regarding, for example, angles, torques and/or sizes, for the switchgear module 10.

In Fig. 1, the cam assembly 130 of the switching assembly may be configured to connect the first disk element 110 to the second disk element 120 and allow the second disk element 120 pivoting with the first disk element 110, when the operating element 160 pivots between the first and second angular positions 161, 162 for switching the switchgear module 10 between the ON-mode as shown in Fig. 1 (a1) and (a2) and the OFF-mode as shown in Fig. 1 (b1) and (b2).

The cam assembly 130 is arranged at and attached to the rim of the first disk element 110 and comprises, as further shown in Fig. 2, a pivoting element 131, a protruding element 132 arranged at an end of the pivoting element 131 and a third pin 133, which may be arranged at the second disk element 120 und with which the pivoting element 131 may engage, when the operating element may pivot between the first 0° angular position 161 and the second 90° angular position 162 for switching the switchgear module 10.

The interlocking assembly comprises the first disk element 110, which comprises a slotted opening or a first opening 115, along which the locking element 200 is able to slide by means of a second pin 215 between the first end 1151 and the second end 1152, when the operating element 160 pivots between the first 0° angular position 161 and the second 90° angular position 162 for switching the switchgear module 10 between the ON-mode as shown in Fig. 1 (a1) and (a2) and the OFF-mode as shown in Fig. 1 (b1) and (b2), while the module 10 secured or fixed in the compartment without moving the locking element 200.

In addition, the first disk element 110 further comprises a second opening 116, in which a first pin 126 of the second disk element 120 may be arranged at and fixed at a first opening end 1161 of the slotted opening 115 by means of the cam assembly 130, when the operating element 160 pivots the first 0° angular position 161 and the second 90° angular position 162 for switching the switchgear module 10 between the ON-mode as shown in Fig. 1 (a1) and (a2) and the OFF-mode as shown in Fig. 1 (b1) and (b2).

In other words, by turning or pivoting the handle 160 couterclockwise in a direction from the first 0° angular position 161 to the second 90° angular position as shown in Fig. 3, the first disk element 110 and the second disk element 120, which is connected to the first element 110 via the cam assembly 130, may follow the rotary motion of the handle 160 and pivot with the handle 160 in the same direction to switch the switchgear module 10 from the ON-mode as shown in Fig. 1 (a1) and (a2) to the OFF-mode as shown in Fig. 1 (b1) and (b2). The rotational motion of the first disk element 110 may thus be transmitted to the second element 120 via the cam assembly 130, the pivoting element 131 of which may be spring-loaded to ensure that the pivoting element 131 may firmly engage with the third pin 133 while pivoting. A relative rotation between the first and second disk elements 110, 120 may not occur and the first pin 126 may be kept at the relative same position of the first opening end 1161 of the second opening 116.

In Fig. 1, the cam assembly 130 of the first disk element 110 may further be configured to disconnect the first disk element 110 from the second disk element 120, and to allow the first disk element 120 pivoting with the operating element 160 between the second group of angular positions 162, 164 and converting a rotational motion of the first disk element 110 into a translational or linear motion of the interlocking assembly, by means of the locking element 200, for securing or releasing the switchgear module 10.

In order to transit the controlling over the switching assembly for switching the switchgear module 10, for example from the first ON-mode to the second OFF-mode, to the controlling over the interlocking assembly for securing or releasing the switchgear module 10, the multi-use control system 100 further comprises a transition assembly that comprises a transition element 135 and the cam assembly 130. The transition element 135 in Fig. 1 may be designed as a hinge, which is placed adjacent to the first disk element 110 and configured to collide with the protruding element 132 of the cam assembly as shown in Fig. 1 (b1) and (b2), when the handle 160 of Fig. 3 pivots to the second 90° angular position corresponding to the OFF-mode of the switchgear module 10.

In other words, turning or pivoting the handle 160 further may lead to the collision of the pivoting element 131 via the protruding element 132 with the hinge 135, which may only turn 90° clockwise. As a result of the collision, the pivoting element 131 may not further engage with the third pin 133 fixed to the second disk element 120, the first and second disk elements 110, 120 may become disconnected from each other, and the transmission of the rotary motion between the first and second disk elements 110, 120 may be interrupted, since the cam assembly 130 may not transmit the driving rotary force from the first disk element 110 to the second disk element 120. Accordingly, as the second pin 215 of the locking element 200 may slide to the second end 1152 of the slotted opening 115, the first disk element 110 may now connect to the locking element 200 to form the interlocking assembly. The further pivoting of the handle 160 in the same counterclockwise direction may be converted to control the interlocking assembly and to release or secure the switchgear module 10.

Further, by further turning or pivoting the handle continuously in the same counterclockwise direction from the second 90° angular position 162 to the open 180° angular position 164, the first disk element 110 may follow the rotatory motion of the handle 160 and pivot to a RELEASE-mode as shown in Fig. 1 (c1) and (c2). Accordingly, as the second pin 215 of the locking element 200 is fixed at the second end 1152 of the slotted opening 115, the rotational motion of the handle 160 and the first disk element 110 may be converted into a translational or linear motion of locking element 200 by a redefined distance via the second pin 215. The locking element 200 in Fig. 1 may be designed as an interlocking lever, which may be lifted by the predefined distance by pivoting the handle 160 from the closed 90° angular postion 162 to the open 180° angular position and turning the switchgear module 10 form the OFF-mode to the RELEASE-mode. The second pin 215 and the slotted opening 115 may thus form a second cam assembly for the interlocking assembly of the control system 100. As such, the switchgear module 10 may be released or withdrawable from the compartment in the RELEASE-mode as shown in Fig. 1 (c1) and (c2).

In addition, since the second disk element 120 is disconnected or decoupled from the rotary motion of the first disk element 110, it may be provided that the first pin 126 of the second disk element 120 may slide along the second opening 116 of the first disk element 110 from the first opening end 1161 in the OFF-mode of Fig. 1 (b1) and (b2) to the second opening end 1162 in the RELEASE-mode of Fig. 1 (c1) and (c2). It may be provided that a sliding distance of the first pin 126 may correspond to the angular range of the handle 160, which may be 90° from the closed angular position 162 and the open 180° angular position 164, and the predefined distance. The first pin 126 and the second opening 116 may thus form a third cam assembly for the control system 100.

The plurality of cam assemblies comprising the cam assembly 110 as the first cam assembly, the second cam assembly and the third cam assembly among the first disk element 110, the second disk element 120 and the locking element 200 allow a countinuous transition between the switching mechamism and the interlocking mechanism for the low-voltage switchgear module 10 in a single continuous motion. Also, the plurality of cam assemblies of the control system allow a separation of the switching and interlocking functions for the switchgear module 10.

Fig. 2 shows schematically an example of a multi-use control system 100 for a switchgear module 10 in a front view. In contrast to Fig. 1, the plurality of modes of operation of the switchgear module 10 may comprise, in addition to a first ON-mode in Fig. 2(a) and a second OFF-mode in Fig. 2(b), a third mode of operation, which may be a TEST-mode as shown in Fig. 2 (c). Accordingly, the first group of angular positions of the operating element 160 may comprise, in addition to a first 0° angular position 161 for the ON-mode of the module 10 and a second 90° angular position 162 for the OFF-mode of the module 10, a third angular position 163 or a 135° angular position that may be configured to correspond to and interconnect with the third mode of operation or the TEST-mode in Fig. 2 (c).

By pivoting the handle 160 and the shaft 150 from the first 0° angular position 161 to the second 90° angular position 162 in the counterclockwise direction, the switchgear module 10 may be switched from the ON-mode in Fig. 2(a) to the OFF-mode in Fig. 2(b) by means of the switching assembly comprising the first disk element 110 and the second disk element 110 that is connected to the first disk element 110 via the cam assembly 130. As the pivoting element 132 of the cam assembly 130 may engage with the third pin 133 fixed at the second disk element 120, the rotary motion of the first disk element 110 may be transmitted to the rotary motion of the second disk element 110. The second pin 215 of the locking element 200 may slide along the slotted opening 115 of the first disk element 110 from the first end 1151 to an intermediate point 1153 as shown in Fig. 2(b), without leading to any linear or translational motion of the locking element 200. The first pin 126 of the second disk element 120 may be fixed at the first opening end 1161 of the second opening 116 of the first disk element 110 while pivoting.

By further pivoting the handle 160 from the second 90° angular position 162 to the third 135° angular position 163 in the same direction, the switchgear module 10 may be switched from the OFF-mode in Fig. 2 (b) to the TEST-mode in Fig. 2(c) by means of the switching assembly, until the cam assembly 130 may collide with the transition element or the hinge 135. The second pin 215 may further slide along the slotted opening 115 from the intermediate point 1153 to the second end 1152 of the slotted opening 115, so that the locking element 200 may not be moved or lifted by the rotary motion of the first disk element 110. By means of the clutched cam assembly 130, the first pin 126 may further be fixed at the first opening end 1161 of the second opening 116 of the first dist element 110 while pivoting.

The third 135° angular position 163 may be designed as the turning angular position or the transition angular position, since third 135° angular position 163 may also be designed as the closed angular position, at which the switchgear module 10 may still be secured to the compartment by means of the interlocking assembly.

By futher pivoting the handle 160 from the third 135° angular position or the closed angular position 163 to the open 180° angular position 164, the interlocking assembly of the control system 100 may be configured to release the switchgear module 10 in the RELEASE-mode in Fig. 2 (d). As a result of the collision between the hinge 135, which may turn 90° in a clockwise direction, and the pivoting element 131 of the cam assembly 130 via the protruding element 132, the first disk element 110 may automatically be disconnected from the second disk element 120 by the disclutched cam aasembly 130, so that the first pin 126 of the second disk element 120 may slide along the second opening 116 of the first disk element 110 from the first opening end 1161 to the second opening end 1162. As such, the mode of operation of the switchgear module 10 may not be affected and switched while the interlocking assembly being in operation. As the second pin 215 is fixed at the second end 1152 of the slotted opening 115, the rotational motion of the first disk element 110 may be converted to the linear, translational motion of the locking element 200 over a predefined distance 210. The transition element 135 may be designed to turn 90° in a counterclockwise direction, so that the pivoting element 131 of the cam assembly may be designed to collide with the hinge 135 in one direction but may pass through in the opposite direction.

Fig. 3 further shows that the multi-use control system 100 having the operating element 160 may be arranged at the switchgear module 10. For example, the operating element 160 may be arranged at the outer surface of the switchgear module 10 or at the outer surface of the compartment for the switchgear module 10, so that the handle 160 may be pivotable from the exterior, and the other components such as the first disk element 110, the second disk element 120 and the cam assemblies 130 may be arranged inside the switchgear module 10 or inside the compartment for securing the switchgear module 10. The operating element 160 may pivot in two separate angular ranges including a first angular range 180, which may cover the 0° to 90° or 135° angular positions, for switching the switchgear module between the ON-, OFF- and/or TEST-modes and a second angular range 280, which may cover the 90° or 135° to 180° angular positions, for controlling the interlocking assembly to lock or release the switchgear module 10. Further, the operating element 160 may be designed to privot continuously between the first angular range 180 and the second angular range 280, so that the switching mechanism and the interlocking mechanism for the switchgear module 10 may be transited seamlessly both in the counterclockwise direction and in the clockwise direction.

Fig. 4 shows schematically that, by reversing the pivoting direction of the handle 160, the shaft 150 and the connected first disk element 119 in the opposite direction, the transition assembly may be configured to transit the controlling over the interlocking assembly for securing the switchgear module 10 to the compartment, again, to the controlling over the switching assembly for switching the switchgear module 10, from the third TEST-mode of operation and/or the second OFF-mode of operation to the first ON-mode of operation, when the handle 160 may pivot from the second group of angular positions 164, 163 to the first group of angular positions 163, 162, 161 in the opposite direction, for example, from the open 180° angular position 164 back to the closed 135° angular position 163, which may also be the third 135° angular position after transition from the interlocking mechanism to the switching mechanism. By further pivoting the handle 160 in the opposite direction, the switchgear module 10 may be switched from the TEST-mode to the OFF-mode or the ON-mode, since the first disk element 110 may connect to the second disk element 120 via the clutched cam assembly 130. The hinge 135 may be designed to allow a collision-free travel of the pivoting element 131.

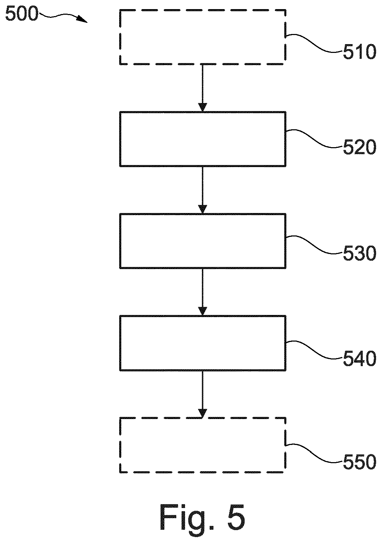

Fig. 5 shows schematically a flow chart illustrating a method for operating a switchgear module 10 by means of a multi-use control system 100.

In step 520, an operating element pivots in a direction between a first group of angular positions 161, 162, 163 for switching the switchgear module 10 between a plurality of modes of operation by means of a switching assembly.

In step 530, the transition from the controlling over the switching assembly for switching the switchgear module 10 to the controlling over an interlocking assembly for releasing the switchgear module 10 from a compartment may be performed.

In step 540, the operating element 160 further pivots in the direction between a second group of angular positions 161, 162, 163 for securing the switchgear module 10 to or releasing the switchgear module 10 from a compartment by means of a locking element 200 of an interlocking assembly.

Prio to step 520, the method may further comprise the step 510, in which the operating element 160 may be connected to a first disk element 110 of the switching assembly via a shaft 150, so that the operating element 160, which may be a handle, may be driven manually or automatically to pivot about an axis of the shaft 150. The shaft 150 may be configured to arrange the handle 160, the first disk element 110 and the second element 120 in line with a common axis of rotation while pivoting.

Additionally, the method may further comprise the step 550, in which the operating element 160 may pivot in an opposite direction for securing the switchgear module 10 to the compartment, transiting the controlling over the interlocking assembly to the controlling over the switching assembly, and pivoting the operating element 160 between the first group of angular positions 161, 162, 163 for switching the switchgear module between the plurality of modes of operation.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SIGNS

- 10: switchgear module
- 100: multi-use control system
- 110: first disk element
- 115: slotted opening or first opening
- 1151: first end of slotted opening
- 1152: second end of slotted opening
- 1153: intermediate point of slotted opening
- 116: second opening
- 1161: first opening end of second opening
- 1162: second opening end of second opening
- 120: second disk element
- 126: first pin
- 130: cam assembly
- 131: pivoting element of cam assembly
- 132: protruding element
- 133: third pin
- 135: transition element
- 150: shaft
- 160: opering element or handle
- 161: first angular position
- 162: second angular position
- 163: third angular position
- 164: open angular position
- 180: first angular range
- 200: locking element
- 210: a predefined distance
- 215: second pin
- 280: second angular range
- 500: method for operating a switchgear module
- 510: step of connecting an operating element via a shaft
- 520: step of pivoting an operating element between a first group of angular positions
- 530: step of transiting controlling over switching assembly to interlocking assembly
- 540: step of pivoting operating element between a second group of angular positions
- 550: step of pivoting the operating element in an opposite direction

## Claims

1. Multi-use control system (100) for a switchgear module (10), comprising:
a switching assembly, configured to switch the switchgear module (10) between a plurality of modes of operation;
an interlocking assembly comprising a locking element (200);
an operating element (160), configured to pivot between a plurality of angular positions comprising a first group of angular positions (161, 162, 163) and a second group of angular positions (163, 164);
wherein the interlocking assembly is configured to secure the switchgear module (10) to or release the switchgear module from a compartment by means of the locking element (200);
wherein the operating element (160) is configured to control the switching assembly to switch the switchgear module (10) between the plurality of modes of operation, when pivoting between the first group of angular positions (161, 162, 163), and to control the interlocking assembly to secure or release the switchgear module (10), when pivoting between the second group of angular positions (163, 164).

2. The multi-use control system (100) according to claim 1,
wherein the switching assembly comprises a first disk element (110), connectable to the operating element (160) and configured to be pivotable with the operating element (160), a second disk element (120) and a cam assembly (130);
wherein the cam assembly (130) of the switching assembly is configured to connect the first disk element (110) to the second disk element (120) and allow the second disk element (120) pivoting with the first disk element (110), when the operating element (160) pivots between the first group of angular positions (161, 162, 163) for switching the switchgear module (10) between the plurality of modes of operation.

3. The multi-use control system (100) according to claim 2,
wherein the interlocking assembly comprises further the first disk element (110), comprising a slotted opening (115), along which the locking element (200) is able to slide when the operating element (160) pivots between the first group of angular positions (161, 162, 163) for switching the switchgear module (10) between the plurality of modes of operation;
wherein the cam assembly (130) of the first disk element (110) is configured to disconnect the first disk element (110) from the second disk element (120), and to allow the first disk element (120) pivoting with the operating element (160) between the second group of angular positions (163, 164) and converting a rotational motion of the first disk element (110) into a translational motion of the interlocking assembly, by means of the locking element (200), for securing or releasing the switchgear module (10).

4. The multi-use control system (100) according to one of the preceding claims,
wherein the plurality of modes of operation of the switchgear module (10) comprises a first mode of operation and a second mode of operation;
wherein the first group of angular positions of the operating element (160) comprises a first angular position (161), configured to interconnect with the first mode of operation of the switchgear module (10), and a second angular position (162), configured to interconnect with the second mode of operation of the switchgear module (10).

5. The multi-use control system (100) according to claim 4,
wherein the first mode of operation of the switchgear module (10) is an ON-mode and the second mode of operation of the switchgear module is an OFF-mode;
wherein the first angular position (161) of the operating element (160) is a 0° angular positon, and the second angular position (162) of the operating element is a 90° angular positon or a 135° angular position.

6. The multi-use control system (100) according to one of the preceding claims,
wherein the plurality of modes of operation of the switchgear module (10) further comprises a third mode of operation;
wherein the first group of angular positions of the operating element further comprises a third angular position (163), configured to interconnect with the third mode of operation of the switchgear module (10).

7. The multi-use control system according to claim 6,
wherein the third mode of operation of the switchgear module (10) is an TEST-mode;
wherein the second angular position (162) of the operating element is a 90° angular positon and the third angular position (163) of the operating element is a 135° angular positon.

8. The multi-use control system according to one of the preceding claims,
wherein the second group of angular positions of the operating element (160) comprises
a closed angular position, configured to interconnect with the interlocking assembly for securing the switchgear module (10) to the compartment by means of the locking element (200), and
an open angular position (164), configured to interconnect with the interlocking assembly for releasing the switchgear module (10) from the compartment.

9. The multi-use control system according to one of the preceding claims 6 to 8,
wherein the second angular position (162) or the third angular position (163) of the first group of angular positions is the closed angular position of the second group of angular positions.

10. The multi-use control system (100) according to one of the preceding claims, further comprising:
a transition assembly comprising a transition element (135);
wherein the transition assembly is configured to transit the controlling over the switching assembly for switching the switchgear module (10), from the first mode of operation to the second mode of operation and/or the third mode of operation, to the controlling over the interlocking assembly for releasing the switchgear module (10) from the compartment, when the operating element (160) pivots from the first group of angular positions (161, 162, 163) to the second group of angular positions (163, 164) in a direction.

11. The multi-use control system (100) according to claim 10,
wherein the transition assembly is configured to transit the controlling over the interlocking assembly for securing the switchgear module (10) to the compartment to the controlling over the switching assembly for switching the switchgear module (10), from the third mode of operation and/or the second mode of operation to the first mode of operation, when the operating element (160) pivots from the second group of angular positions (163, 164) to the first group of angular positions (161, 162, 163) in an opposite direction.

12. The multi-use control system (100) according to one of the preceding claims 2 to 11,
wherein the operating element (160) is a handle, configured to connect to the first disk element (110) via a shaft (150) and be driven manually or automatically to pivot about an axis of the shaft (150).

13. Switchgear module (10) comprising a multi-use control system (100) according to one of the preceding claims 1 to 12,
wherein the switchgear module (10) is a low-voltage switchgear module.

14. Use of a multi-use control system (100) according to one of the preceding claims 1 to 12 for a switchgear module (10) according to claim 13 for a safe operation of the switchgear module (10).

15. Method (500) for operating a switchgear module (10) by means of a multi-use control system (100), comprising the steps of:
pivoting (520) an operating element (160) in a direction between a first group of angular positions (161, 162, 163) for switching the switchgear module (10) between a plurality of modes of operation by means of a switching assembly;
transiting (530) the controlling over the switching assembly for switching the switchgear module (10) to the controlling over an interlocking assembly for releasing the switchgear module (10) from a compartment;
further pivoting (540) the operating element (160) in the direction between a second group of angular positions (161, 162, 163) for securing the switchgear module (10) to or releasing the switchgear module (10) from a compartment by means of a locking element (200) of an interlocking assembly.
